# EUROPÄISCHE PATENTSCHRIFT

(11) **EP 3 034 439 B1**
(45) Veröffentlichungstag und Bekanntmachung des Hinweises auf die Patenterteilung: **10.01.2018**
(21) Anmeldenummer: 15192882.7
(22) Anmeldetag: 04.11.2015
(51) Int. Cl.: B65G 47/244, B65G 47/252, B65G 47/32, B65G 47/91

(54) **FÖRDERVORRICHTUNG**
CONVEYING DEVICE
DISPOSITIF DE TRANSPORT

(30) Priorität: 18.12.2014 DE 102014226463
(43) Veröffentlichungstag der Anmeldung: 22.06.2016
(73) Patentinhaber: ROBERT BOSCH GMBH, 70442 Stuttgart (DE)
(72) Erfinder: Waeckerlin, Juerg, 8222 Beringen (CH); Frank, Alexander, 8207 Schaffhausen (CH)

(56) Entgegenhaltungen:
- EP-A1- 0 654 407
- EP-A1- 0 654 429
- EP-A1- 2 108 604

## Beschreibung

### Stand der Technik

In EP 0 654 429 A1 ist bereits eine gattungsgemäße Fördervorrichtung zum Fördern von flachen, in einem Produkteinlaufbereich in einer Transportebene auf ihren Hauptflächen liegend zugeführten Produkten entlang einer Transportstrecke zu einem Produktabgabebereich, mit einem Produkteinlauffördermittel, das dazu vorgesehen ist, die auf ihren Hauptflächen liegend zugeführten Produkte ausgehend vom Produkteinlaufbereich entlang eines ersten Transportstreckenabschnitts zu fördern, mit einem Produktabgabefördermittel, das einen Aufrichtabschnitt, der dazu vorgesehen ist, die Produkte auf ihre jeweiligen Ränder aufzurichten, und einen sich anschließenden Förderabschnitt, der dazu vorgesehen ist, die Produkte in den Produktabgabebereich zu fördern, aufweist, und mit einer Zwischenfördervorrichtung, die dazu vorgesehen ist, die Produkte vom zumindest einen Produkteinlauffördermittel zum Produktabgabefördermittel zu fördern, wobei die Zwischenfördervorrichtung dazu vorgesehen ist, in einem ersten, zu einer Abgabe von auf ihren Hauptflächen liegenden Produkten vorgesehenen Betriebszustand die Produkte im Förderabschnitt des Produktabgabefördermittels abzulegen und in einem weiteren, zu einer Abgabe von auf ihren Rändern stehenden Produkten vorgesehenen Betriebszustand die Produkte im Aufrichtabschnitt des Produktabgabefördermittels abzulegen, wobei die Zwischenfördervorrichtung ein in die Transportstrecke bewegbares Zwischenförderband aufweist, das dazu vorgesehen ist, die Produkte im weiteren, zu einer Abgabe von auf ihren Rändern stehenden Produkten vorgesehenen Betriebszustand zum Aufrichtabschnitt des Produktabgabefördermittels zu fördern, vorgeschlagen worden.

### Offenbarung der Erfindung

Die Erfindung geht aus von einer Fördervorrichtung zum Fördern von flachen, in einem Produkteinlaufbereich in einer Transportebene auf ihren Hauptflächen liegend zugeführten Produkten entlang einer Transportstrecke zu einem Produktabgabebereich, mit zumindest einem Produkteinlauffördermittel, das dazu vorgesehen ist, die auf ihren Hauptflächen liegend zugeführten Produkte ausgehend vom Produkteinlaufbereich entlang eines ersten Transportstreckenabschnitts zu fördern, mit einem Produktabgabefördermittel, das einen Aufrichtabschnitt, der dazu vorgesehen ist, die Produkte auf ihre jeweiligen Ränder aufzurichten, sowie einen sich anschließenden Förderabschnitt, der dazu vorgesehen ist, die Produkte in den Produktabgabebereich zu fördern, aufweist, und mit einer Zwischenfördervorrichtung, die dazu vorgesehen ist, die Produkte vom zumindest einen Produkteinlauffördermittel zum Produktabgabefördermittel zu fördern, wobei die Zwischenfördervorrichtung dazu vorgesehen ist, in einem ersten, zu einer Abgabe von auf ihren Hauptflächen liegenden Produkten vorgesehenen Betriebszustand die Produkte im Förderabschnitt des Produktabgabefördermittels abzulegen und in einem weiteren, zu einer Abgabe von auf ihren Rändern stehenden Produkten vorgesehenen Betriebszustand die Produkte im Aufrichtabschnitt des Produktabgabefördermittels abzulegen, wobei die Zwischenfördervorrichtung ein in die Transportstrecke bewegbares Zwischenförderband aufweist, das dazu vorgesehen ist, die Produkte im weiteren, zu einer Abgabe von auf ihren Rändern stehenden Produkten vorgesehenen Betriebszustand zum Aufrichtabschnitt des Produktabgabefördermittels zu fördern.

Es wird vorgeschlagen, dass die Zwischenfördervorrichtung erfindungsgemäß zumindest eine Produktwendeeinrichtung aufweist, die dazu vorgesehen ist, die Produkte in einem Fördervorgang aufzunehmen, um eine zu deren Hauptflächen senkrechte Achse um einen Solldrehwinkel zu drehen und in Folge wieder abzugeben.
Unter einem "Produkteinlaufbereich" soll in diesem Zusammenhang insbesondere ein Transportstreckenabschnitt verstanden werden an dem entlang Produkte in die Fördervorrichtung eintreten. Der Produkteinlaufbereich kann insbesondere von einem Fördermittel wie einem Förderband gebildet werden. Das Fördermittel des Produkteinlaufbereichs kann insbesondere dazu vorgesehen sein, Produkte von einem vorangegangenen Prozess in die Fördervorrichtung einzubringen. Das Fördermittel des Produkteinlaufbereichs kann ganz oder teilweise Bestandteil einer vorgelagerten Maschine sein, insbesondere einer Verpackungsmaschine.

Insbesondere kann die Verpackungsmaschine als Horizontale Schlauchbeutelmaschine ausgebildet sein. Der Produkteinlaufbereich kann von einem Auslaufband der Schlauchbeutelmaschine gebildet werden. Unter einer "Transportebene" soll in diesem Zusammenhang insbesondere eine Ebene verstanden werden, auf der die Produkte während des Transports aufliegen. Die Transportebene kann insbesondere von einer Bandoberfläche gebildet werden. Die Transportebene ist bevorzugt quer zu einer Transportrichtung zumindest im Wesentlichen horizontal, das heißt senkrecht zur Schwerkraft, ausgerichtet. Unter "zumindest im Wesentlichen" soll in diesem Zusammenhang eine Abweichung von weniger als 10°, bevorzugt weniger als 5° verstanden werden. Die Transportebene ist zur Transportrichtung bevorzugt parallel oder um einen Winkel von weniger als 30°, bevorzugt weniger als 15° geneigt. Die Transportebene kann entlang der Transportstrecke mehrere unterschiedliche Neigungen aufweisen, insbesondere entlang unterschiedlicher Transportstreckenabschnitte. Unter einer "Transportrichtung" soll in diesem Zusammenhang insbesondere ein mittlerer Richtungsvektor verstanden werden, an dem entlang die Produkte vom Produkteinlaufbereich zum Produktabgabebereich entlang der Transportstrecke gefördert werden. Unter einem "Produktabgabereich" soll in diesem Zusammenhang insbesondere ein Transportstreckenabschnitt verstanden werden, indem Produkte aus der Fördervorrichtung abgegeben werden, insbesondere an einen nachfolgenden Verpackungsprozess. Zum Beispiel kann ein Greifer einer nachfolgenden Verpackungseinrichtung Produkte im Produktabgabereich zu einer Weiterverpackung entnehmen. Unter einem "Produkt" soll in diesem Zusammenhang insbesondere ein durch die Fördervorrichtung zu fördernder Gegenstand verstanden werden. Bevorzugt kann das Produkt ein durch eine Horizontale Schlauchbeutelmaschine erstellter Schlauchbeutel sein. Der Schlauchbeutel kann bevorzugt ein oder mehrere Gegenstände enthalten, wie insbesondere Schokoladenriegel oder Kekse. Der Schlauchbeutel kann jedoch auch andere Gegenstände enthalten, wie Spritzen oder Tablettenblister. Ebenfalls kann die Fördervorrichtung dazu vorgesehen sein, unverpackte Produkte zu fördern. Unter einem "flachen" Produkt soll in diesem Zusammenhang ein Produkt verstanden werden, welches zumindest eine Hauptfläche aufweist, die sich dazu eignet, das Produkt auf dieser Hauptfläche liegend zu fördern. Insbesondere soll das Produkt auf der Hauptfläche liegend eine stabile Position einnehmen, das heißt insbesondere nicht kippen, wenn eine Auflagefläche, auf der das Produkt aufliegt, um bis zu 30° geneigt wird. Bevorzugt weisen die Produkte eine Längs- und eine Querrichtung auf. Bevorzugt weist das Produkt in Längsrichtung eine zumindest 1.5-mal größere, besonders bevorzugt mehr als 2-mal größere Erstreckung auf als in Querrichtung. Längs- und Querrichtung sind bevorzugt in einem rechten Winkel zueinander angeordnet und parallel zur Hauptfläche. Bevorzugt ist eine senkrecht zur Hauptfläche gemessene Dicke des Produkts weniger als halb so groß wie die eine Breite des Produkts in Querrichtung. Unter "Rändern" des Produkts sollen in diesem Zusammenhang insbesondere zur Hauptfläche senkrechte Flächen des Produkts verstanden werden. Unter einem "Aufrichten" eines Produkts soll in diesem Zusammenhang insbesondere ein Aufstellen des Produkts von einer auf seiner Hauptfläche liegenden Position in eine auf einem Rand des Produkts stehende Position verstanden werden. Insbesondere kann das Aufrichten erfolgen, indem das Produkt um eine zur Transportrichtung senkrechte und zur Transportebene parallele Achse um einen Winkel von 80° - 100°, bevorzugt 85° - 95°, gedreht wird.

Durch die erfindungsgemäße Ausgestaltung der Fördervorrichtung können durch eine Wahl des Betriebszustands auf ihren Hauptflächen liegende Produkte oder auf ihren Rändern stehende Produkte abgegeben werden. Die Fördervorrichtung kann besonders flexibel sein.

Bevorzugt ist das Produktabgabefördermittel dazu vorgesehen, die Produkte kontinuierlich zu fördern und/oder aufzurichten. Unter "kontinuierlich" soll in diesem Zusammenhang insbesondere in einer kontinuierlichen, das heißt unterbrechungsfreien, Förderbewegung verstanden werden. Bevorzugt kann das Produktabgabefördermittel zumindest ein umlaufendes Transportelement aufweisen, wie zum Beispiel eine Förderkette. Bevorzugt kann das Transportelement entlang des Förderabschnitts in Transportrichtung bewegt werden. Bevorzugt wird das Transportelement entlang eines Rücklaufabschnitts entgegen der Transportrichtung bewegt. Bevorzugt weist das Produktabgabefördermittel beidseitig des Förderabschnitts Umlenkabschnitte auf, in denen das Transportelement vom Förderabschnitt in den Rücklaufabschnitt sowie vom Rücklaufabschnitt in den Förderabschnitt um 180° umgelenkt wird. Bevorzugt ist der Aufrichtabschnitt Teil des Umlenkabschnitts vom Rücklaufabschnitt zum Förderabschnitt. Insbesondere kann der Aufrichtabschnitt von einem Beginn des Aufrichtabschnitts bis zum Förderabschnitt einen Umlauf des Transportelements um 90° bis zum Förderabschnitt umfassen. Produkte, die in den Beginn des Aufrichtabschnitts abgelegt werden, können durch das Produktabgabefördermittel vorteilhaft kontinuierlich um eine zur Transportrichtung senkrechte und zur Transportebene parallele Achse um einen Winkel 90° gedreht und somit auf ihre Ränder stehend aufgerichtet werden. Bevorzugt weist das Transportelement zur Transportebene senkrechte Trennelemente auf, die die Produkte im Aufrichtabschnitt sicher fördern. Ein ungewolltes Verrutschen von Produkten kann vermieden werden.

Die Produktwendeeinrichtung kann insbesondere dazu vorgesehen sein, längsorientierte Produkte aufzunehmen und in einer Querorientierung abzugeben. Die Produkte können vorteilhaft im Produkteinlaufbereich in einer Längsorientierung in die Fördervorrichtung eintreten und im Produktabgabebereich in einer Querorientierung in Transportrichtung nebeneinander liegend und/oder nebeneinander stehend abgegeben werden. Diese Anordnung kann besonders vorteilhaft für eine Weiterverpackung in einer Mehrfachverpackung sein. Unter einem "Solldrehwinkel" soll in diesem Zusammenhang insbesondere ein Winkel verstanden werden, der dazu notwendig ist, die Längs- in eine Querorientierung zu überführen. Bei gleichbleibender Transportrichtung beträgt der Solldrehwinkel vorzugsweise 90°. Ändert sich die Transportrichtung von einem Aufnahme- zu einem Abgabeort, beträgt der Solldrehwinkel bevorzugt 90° abzüglich einer Richtungsänderung der Transportrichtungen des Aufnahme- und des Abgabeorts.

Bevorzugt weist die zumindest eine Produktwendeeinrichtung zu einem Drehen der Produkte um eine zur Transportebene senkrechte Rotationsachse umlaufende Produkttransportmittel auf, die dazu vorgesehen sind, die Produkte zum Transport aufzunehmen und nach einem Umlauf der Produkttransportmittel um den Solldrehwinkel um die Rotationsachse wieder abzugeben. Bevorzugt sind die Produkttransportmittel als Vakuumgreifer ausgebildet. Bevorzugt weist die Produktwendeeinrichtung eine im Umlauf angeordnete Kulissensteuerung auf, die dazu vorgesehen ist, die Produkttransportmittel in den Produktaufnahme- und - abgabebereichen in Richtung der Transportebene abzusenken und zwischen diesen Bereichen von der Transportebene anzuheben. Die Produktwendeeinrichtung kann besonders schnell und/oder effizient sein. Die Produkttransportmittel können in einer kontinuierlichen Bewegung im Umlauf bewegt werden. Beschleunigungen, die durch einen alternierenden Betrieb von Produkttransportmitteln verursacht werden, können vermieden werden. Die Produktwendeeinrichtung kann die Produkte in einem Schritt drehen und zwischen dem Aufnahmebereich und dem Abgabebereich fördern. Der Aufnahmebereich und der Abgabebereich können bevorzugt Teile unterschiedlicher Fördermittel sein. Die Produktwendeeinrichtung kann vorteilhaft die Produkte drehen und zwischen den Fördermitteln überführen.

Das Zwischenförderband kann vorteilhaft die Produkte zum Beginn des Aufrichtabschnitts fördern. Das Zwischenförderband kann insbesondere einen Niveauunterschied in Richtung der Transportebene zwischen dem Beginn des Aufrichtabschnitts des Produktabgabefördermittels und dem Produkteinlauffördermittel ausgleichen.

Weiter wird vorgeschlagen, dass die Produktwendeeinrichtung dazu vorgesehen ist, im weiteren, zu einer Abgabe von auf ihren Rändern stehenden Produkten vorgesehenen Betriebszustand die Produkte vom zumindest einen Produkteinlauffördermittel aufzunehmen und auf das Zwischenförderband abzugeben. Die Produkte können vorteilhaft in einem Arbeitsgang von der Längs- in die Querorientierung gedreht und vom Produkteinlauffördermittel auf das Zwischenförderband überführt werden.

Bevorzugt weist das zumindest eine Produkteinlauffördermittel einen in Richtung der Transportstrecke längenveränderlichen Bandabschnitt auf, der dazu vorgesehen ist, eine bei aus der Transportstrecke herausbewegtem Zwischenförderband entstehende Lücke der Transportstrecke zumindest teilweise zu überbrücken. Unter "zumindest teilweise überbrücken" soll in diesem Zusammenhang insbesondere verstanden werden, dass eine verbleibende Lücke klein genug ist, dass diese durch die Produktwendeeinrichtung durch einen Transport der Produkte vom Aufnahmebereich bis zum Abgabebereich der Produktwendeeinrichtung überbrückt werden kann. Der längenveränderliche Bandabschnitt kann insbesondere als sogenanntes "Pull-Nose-Band" ausgeführt sein. Dem Fachmann sind solche Bänder bekannt. Das Pull-Nose-Band weist an seinem in Transportrichtung orientierten Ende eine in Richtung der Transportstrecke verschiebbare Bandumlenkung auf sowie auf einer Rücklaufseite zumindest drei verschiebbare Bandumlenkungen, mit denen sich eine Länge einer Rücklaufstrecke verändern kann. Die Längenveränderung der Rücklaufstrecke dient zu einer Kompensation der Längenveränderung der Transportstrecke, so dass sichergestellt werden kann,n dass eine Bandspannung bei einer Längenveränderung erhalten bleibt. Die Produkte können durch den längenveränderlichen Bandabschnitt bei herausbewegtem Zwischenförderband vorteilhaft in die Nähe des Produktabgabefördermittels, das heißt bis zum Aufnahmebereich der Produktwendeeinrichtung, transportiert werden. Ein weiteres Band oder andere, weitere Transportmittel zur Überbrückung der Lücke bei aus der Transportstrecke herausbewegtem Zwischenförderband können entfallen. Die Fördervorrichtung kann besonders kompakt sein.
Es wird vorgeschlagen, dass die Produktwendeeinrichtung dazu vorgesehen ist, im ersten, zu einer Abgabe von auf ihren Hauptflächen liegenden Produkten vorgesehenen Betriebszustand die Produkte vom Produkteinlauffördermittel aufzunehmen und um die zu deren Hauptflächen senkrechte Achse um den Solldrehwinkel gedreht auf dem Förderabschnitt des Produktabgabefördermittels abzugeben. Die Produkte können vorteilhaft in einem Arbeitsgang von der Längs- in die Querorientierung gedreht und vom Produkteinlauffördermittel auf das Zwischenförderband überführt werden. Bevorzugt weist die Zwischenfördervorrichtung zwei Produktwendeeinrichtungen auf, wobei eine Produktwendeeinrichtung in einem Übergangsbereich zwischen Zwischenförderband und Produktabgabefördermittel und die weitere Produktwendeeinrichtung in einem Übergangsbereich zwischen Produkteinlauffördermittel und Produktabgabefördermittel bei aus dem Transportweg herausbewegten Zwischenförderband angeordnet ist. Die Fördervorrichtung kann besonders effizient vom ersten zum weiteren Betriebszustand wechseln.
In einer Variante der Erfindung wird eine Lagereinheit vorgeschlagen, die dazu vorgesehen ist, die Produktwendeeinrichtung zwischen einem Übergangsbereich vom Produkteinlauffördermittel zum Zwischenförderband und einem Übergangsbereich vom Produkteinlauffördermittel zum Produktabgabefördermittel verschiebbar zu lagern. Insbesondere kann die Lagereinheit eine Linearführung aufweisen, an der die Produktwendeeinrichtung in Transportrichtung verschiebbar gelagert ist. Bevorzugt weist die Lagereinheit Antriebsmittel auf, die dazu vorgesehen sind, die Produktwendeeinrichtung zwischen den Übergangsbereichen zu verschieben. Eine Steuereinheit kann die Antriebsmittel geeignet ansteuern. Ein Benutzereingriff für eine Umstellung vom ersten in den weiteren Betriebszustand kann entfallen. Eine weitere Produktwendeeinrichtung kann entfallen. Die Fördervorrichtung kann besonders kostengünstig sein.

Bevorzugt weist das Produktabgabefördermittel Gruppiermittel zum Überführen der Produkte in Produktgruppen von horizontalen Produktstapeln und/oder vertikalen Produktstapeln auf. Unter einem "horizontalen Produktstapel" soll in diesem Zusammenhang insbesondere eine Gruppe von auf ihren Rändern nebeneinander stehenden Produkten verstanden werden. Ein horizontaler Produktstapel kann insbesondere gebildet werden, indem im Aufrichtabschnitt mehrere Produkte auf einem Trennelement des Produktabgabefördermittels abgelegt werden. Die Trennelemente bilden Gruppiermittel zum Bilden von horizontalen Produktstapeln. Unter einem "vertikalen Produktstapel" soll in diesem Zusammenhang insbesondere eine Gruppe von auf ihren Hauptflächen in Schwerkraftrichtung übereinander liegenden Produkten verstanden werden. Vertikale Produktstapel können insbesondere gebildet werden, indem mehrere Produkte im Förderabschnitt an einer Position des Transportelements des Produktabgabefördermittels abgelegt und so gestapelt werden. Es ist ebenfalls möglich, dass das Produktabgabefördermittel quer zur Transportrichtung angeordnet mehrere umlaufende Transportelemente aufweist. Diese Transortelemente können Gruppiermittel bilden. Gruppen können insbesondere gebildet werden, indem diese Transportelemente unabhängig angetrieben werden. Dem Fachmann sind solche Gruppiereinrichtungen bekannt. Die Fördervorrichtung kann vorteilhaft zur Bildung von Produktgruppen stehender und/oder liegender Produkte genutzt werden.

Weiter wird eine Verpackungsmaschine nach Anspruch 8 mit einer erfindungsgemäßen Fördervorrichtung vorgeschlagen. Die Verpackungsmaschine kann die genannten Vorteile aufweisen.

Weiter wird ein Verfahren nach Anspruch 9 zum Fördern von Produkten mittels einer erfindungsgemäßen Fördervorrichtung vorgeschlagen. Das Verfahren beinhaltet insbesondere, dass in einem Verfahrensschritt in einem ersten Verfahrensablauf zu einer Abgabe von auf ihren Hauptflächen liegenden Produkten die Produkte in einem Förderabschnitt eines Produktabgabefördermittels abgelegt werden und in einem weiteren Verfahrensablauf zu einer Abgabe von auf ihren Rändern stehenden Produkten die Produkte in einem Aufrichtabschnitt des Produktabgabefördermittels abgelegt werden.

Das erfindungsgemäße Fördervorrichtung soll hierbei nicht auf die oben beschriebene Anwendung und Ausführungsform beschränkt sein. Insbesondere kann die erfindungsgemäße Fördervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Prinzipdarstellung einer erfindungsgemäßen Fördervorrichtung in einem ersten Ausführungsbeispiel in einem ersten Betriebszustand,
- Fig. 2: eine Prinzipdarstellung der Fördervorrichtung in einem weiteren Betriebszustand,
- Fig. 3: eine Prinzipdarstellung der Fördervorrichtung beim Bilden von Produktstapeln liegender Produkte,
- Fig. 4: eine Prinzipdarstellung der Fördervorrichtung beim Bilden von Produktstapeln stehender Produkte,
- Fig. 5: eine Prinzipdarstellung von Beispielen von mit der Fördervorrichtung gebildeten Produktgruppen,
- Fig. 6: eine Prinzipdarstellung einer erfindungsgemäßen Fördervorrichtung in einem zweiten Ausführungsbeispiel und eine Prinzipdarstellung einer Layoutvariante einer erfindungsgemäßen Fördervorrichtung.

### Beschreibung der Ausführungsbeispiele

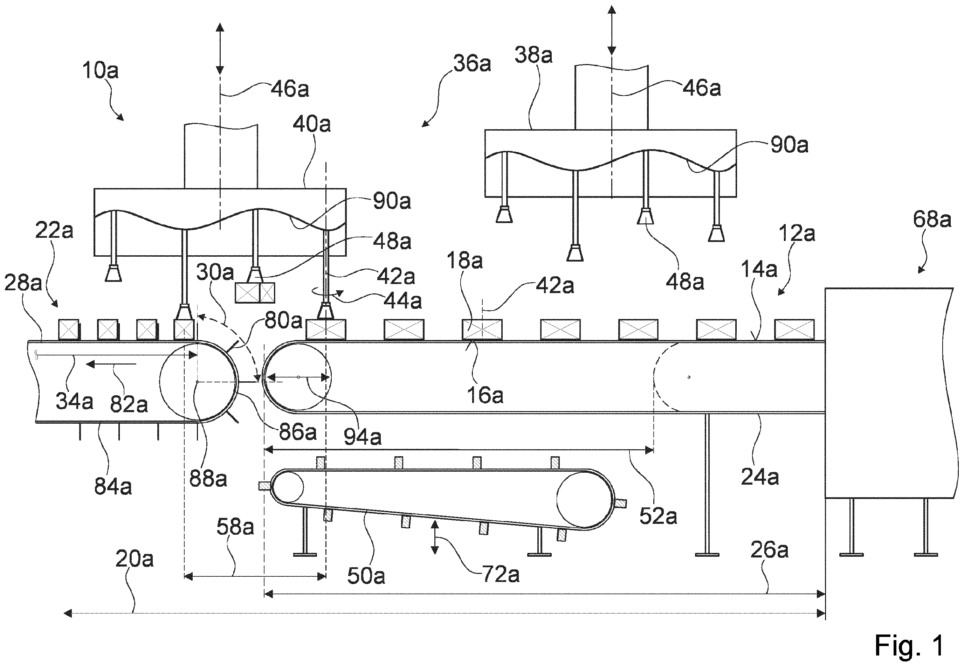

Figur 1 zeigt eine vereinfachte Prinzipdarstellung einer erfindungsgemäßen Fördervorrichtung 10a zu einem Fördern von flachen, in einem Produkteinlaufbereich 12a in einer Transportebene 14a auf ihren Hauptflächen 16a liegend zugeführten Produkten 18a entlang einer Transportstrecke 20a zu einem Produktabgabebereich 22a, mit einem Produkteinlauffördermittel 24a, das dazu vorgesehen ist, die auf ihren Hauptflächen 16a liegend zugeführten Produkte 18a ausgehend vom Produkteinlaufbereich 12a entlang eines ersten Transportstreckenabschnitts 26a zu fördern, mit einem Produktabgabefördermittel 28a, das einen Aufrichtabschnitt 30a, der dazu vorgesehen ist, die Produkte auf ihre jeweiligen Ränder 32a aufzurichten, und einen sich anschließenden Förderabschnitt 34a, der dazu vorgesehen ist, die Produkte 18a in den Produktabgabebereich 22a zu fördern, aufweist, und mit einer Zwischenfördervorrichtung 36a, die dazu vorgesehen ist, die Produkte 18a vom zumindest einen Produkteinlauffördermittel 24a zum Produktabgabefördermittel 28a zu transportieren. Die Funktionen der Fördervorrichtung 10a werden dabei durch eine hier nicht näher dargestellte Steuereinheit gesteuert.

Das Produkteinlauffördermittel 24a fördert die von einer als Horizontale Schlauchbeutelmaschine ausgebildeten Verpackungsmaschine 68a kommenden Produkte 18a in den Produkteinlaufbereich 12a. Die Produkte 18a sind im gezeigten Beispiel Schlauchbeutel, die einen länglichen Gegenstand, wie zum Beispiel einen Schokoladeriegel, enthalten.

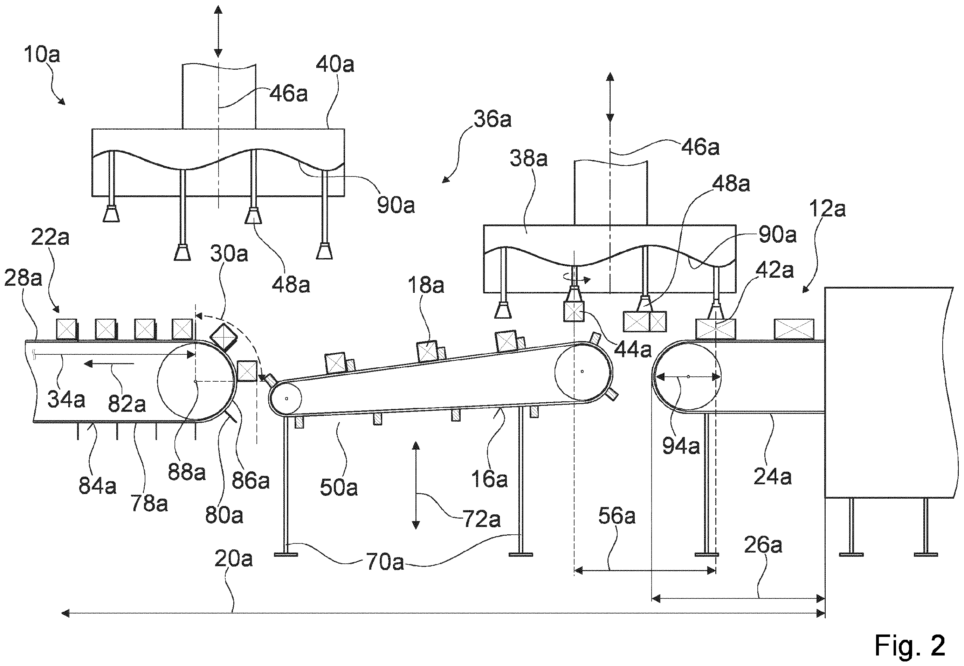

Die Zwischenfördervorrichtung 36a weist ein in die Transportstrecke 20a bewegbares Zwischenförderband 50a auf, das dazu vorgesehen ist, die Produkte 18a im weiteren, zu einer Abgabe von auf ihren Rändern 32a stehenden Produkten 18a vorgesehenen Betriebszustand zum Aufrichtabschnitt 30a des Produktabgabefördermittels 28a zu fördern (Figur 2). Das Zwischenförderband 50a ist an Lagermitteln 70a in Richtung einer senkrecht zur Transportebene 14a ausgerichteten Hubbewegung 72a beweglich gelagert und kann somit in der Hubbewegung 72a in die Transportstrecke 20a eingebracht werden (Figur 2) oder aus der Transportstrecke 20a herausbewegt werden (Figur 1). Das Zwischenförderband 50a ist im in die Transportstrecke 20a eingebrachten Zustand gegenüber der Transportebene 14a des Produkteinlauffördermittels 24a in Transportrichtung 82a in Richtung der Schwerkraft geneigt, so dass ein Höhenunterschied zwischen der Transportebene 14a des Produkteinlauffördermittels 24a und einer Abgabeposition der Produkte 18a im Aufrichtabschnitt 30a ausgeglichen wird. Die Neigung wird erzielt, indem der Hubbewegung 72a eine hier nicht dargestellte Rotation um eine zur Transportrichtung 82a senkrechte und zur Transportebene 14a parallele Achse überlagert wird. Das Produkteinlauffördermittel 24a ist als dem Fachmann bekanntes Pull-Nose-Band ausgebildet, das einen in Richtung der Transportstrecke 20a in einer Verschiebebewegung 94a längenveränderlichen Bandabschnitt 52a aufweist, der dazu vorgesehen ist, eine bei aus der Transportstrecke 20a heraus bewegtem Zwischenförderband 50a entstehende Lücke der Transportstrecke 20a zumindest teilweise zu überbrücken. Um die Längenveränderung des Bandabschnitts 52a auszugleichen, weist das Produkteinlauffördermittel 24a auf einer Rücklaufseite nach einem, dem Fachmann bekannten Funktionsprinzip weitere verschiebbare Umlenkmittel auf, die die Längenveränderung durch eine entgegengesetzte Längenveränderung eines Rücklaufwegs ausgleichen. Diese verschiebbaren Umlenkmittel und der längenveränderliche Rücklaufweg sind in dieser vereinfachten Prinzipskizze nicht dargestellt.

Die Zwischenfördervorrichtung 36a legt in einem ersten, zu einer Abgabe von auf ihren Hauptflächen 16a liegenden Produkten 18a vorgesehenen Betriebszustand die Produkte 18a im Förderabschnitt 34a des Produktabgabefördermittels 28a ab (Figur 1) und legt in einem weiteren, zu einer Abgabe von auf ihren Rändern 32a stehenden Produkten 18a vorgesehenen Betriebszustand die Produkte 18a im Aufrichtabschnitt 30a des Produktabgabefördermittels 28a ab (Figur 2).

Das Produktabgabefördermittel 28a weist ein umlaufendes Transportelement 78a auf, das von einer Förderkette gebildet wird. Das Transportelement 78a weist in regelmäßigen Abständen Trennelemente 80a auf, die als senkrecht zu einer Transportebene des Transportelements 78a angeordnete Trennstege ausgebildet sind. Das Transportelement 78a wird entlang des Förderabschnitts 34a in der Transportrichtung 82a bewegt. Entlang eines Rücklaufabschnitts 84a wird das Transportelement 78a aufgrund des Umlaufs des Transportelements 78a entgegen der Transportrichtung 82a bewegt. Beidseitig des Förderabschnitts 34a weist das Produktabgabefördermittel 28a Umlenkabschnitte 86a auf, in denen das Transportelement 78a vom Förderabschnitt 34a in den Rücklaufabschnitt 84a sowie vom Rücklaufabschnitt 84a in den Förderabschnitt 34a um 180° umgelenkt wird, wobei in den Figuren lediglich der dem Produkteinlauffördermittel 24a zugewandte Umlenkabschnitt 86a dargestellt ist. Der Aufrichtabschnitt 30a ist Teil des Umlenkabschnitts 86a vom Rücklaufabschnitt 84a zum Förderabschnitt 34a. Der Aufrichtabschnitt 30a erstreckt sich entgegen der Transportrichtung 82a vom Übergang des Förderabschnitts 34a um 90° um den Umlenkabschnitt 86a und ist Teil des Umlenkabschnitts 86a. Produkte, die in den Beginn des Aufrichtabschnitts 30a abgelegt werden, werden durch das Produktabgabefördermittel 28a vorteilhaft kontinuierlich um eine zur Transportrichtung 82a senkrechte und zur Transportebene 14a parallele Achse, die einer Umlenkachse 88a eines Umlenkmittels des den Aufrichtabschnitt 30a aufweisenden Umlenkabschnitts 86a entspricht, um einen Winkel 90° gedreht und somit auf ihre Ränder 32a stehend aufgerichtet und anschließend im Förderabschnitt 34a aufgerichtet weiter transportiert.

Die Zwischenfördervorrichtung 36a weist weiter zwei Produktwendeeinrichtungen 38a, 40a auf, die dazu vorgesehen sind, die Produkte 18a in einem Fördervorgang aufzunehmen, um eine zu deren Hauptflächen 16a senkrechte Achse 42a um einen Solldrehwinkel 44a zu drehen und in Folge wieder abzugeben. Die Produktwendeeinrichtungen 38a, 40a sind als Produkttransporträder ausgebildet. Die Produktwendeeinrichtungen 38a, 40a weisen zu einem Drehen der Produkte 18a jeweils um eine zur Transportebene 14a senkrechte Rotationsachse 46a umlaufende Produkttransportmittel 48a auf, die dazu vorgesehen sind, die Produkte 18a zum Transport aufzunehmen und nach einem Umlauf der Produkttransportmittel 48a um den Solldrehwinkel 44a um die Rotationsachse 46a wieder abzugeben. Eine im Umlauf angeordnete Kulissensteuerung 90a steuert ein Absenken und Anheben der Produkttransportmittel 48a in Richtung der Transportebene 14a und somit ein Aufnehmen und Abgeben der Produkte 18a. Die Produkttransportmittel 48a weisen zum Aufnehmen der Produkte 18a Vakuumgreifer auf, die die Produkte 18a durch einen Unterdruck aufnehmen und halten. Soll der Solldrehwinkel 44a von einem Umlaufwinkel der Produkttransportmittel 48a um die Rotationsachse 46a abweichen können, kann eine zusätzliche Getriebevorrichtung dazu vorgesehen sein, die Produkttransportmittel 48a während des Umlaufs um eine zur Rotationsachse 46a parallele Achse zu drehen. Solche Vorrichtungen sind dem Fachmann bekannt.

Die Produktwendeeinrichtung 38a ist dazu vorgesehen, im weiteren, zu einer Abgabe von auf ihren Rändern 32a stehenden Produkten 18a vorgesehenen Betriebszustand die Produkte 18a vom Produkteinlauffördermittel 24a aufzunehmen und auf das Zwischenförderband 50a abzugeben. Dazu wird die Produktwendeeinrichtung 38a bei in den Transportweg 20a eingebrachtem Zwischenförderband 50a in Richtung der Transportebene 14a in einem Übergangsbereich 56a zwischen dem Produkteinlauffördermittel 24a und dem Zwischenförderband 50a, der sich von einem Aufnahmeort bis zu einem Abgabeort der Produkte 18a in diesem Betriebszustand erstreckt, abgesenkt und in Betrieb genommen, während die Produktwendeeinrichtung 40a in einer von der Transportebene 14a entfernten Ruheposition verbleibt, die so gewählt ist, dass die Produktwendeeinrichtung 40a das Fördern der Produkte 18a nicht beeinflusst.

Die Produktwendeeinrichtung 40a ist dazu vorgesehen, im ersten, zu einer Abgabe von auf ihren Hauptflächen 16a liegenden Produkten 18a vorgesehenen Betriebszustand die Produkte 18a vom Produkteinlauffördermittel 24a aufzunehmen und um die zu deren Hauptflächen 16a senkrechte Achse 42a um den Solldrehwinkel 44a gedreht auf dem Förderabschnitt 34a des Produktabgabefördermittels 28a abzugeben. Dazu wird die Produktwendeeinrichtung 40a bei aus der Transportstrecke 20a ausgebrachtem Zwischenförderband 50a in Richtung der Transportebene 14a in einem Übergangsbereich 58a zwischen dem Produkteinlauffördermittel 24a und dem Produktabgabefördermittel 28a, der sich von einem Aufnahmeort bis zu einem Abgabeort der Produkte 18a in diesem Betriebszustand erstreckt, abgesenkt und in Betrieb genommen, während die Produktwendeeinrichtung 38a in einer von der Transportebene 14a entfernten Ruheposition verbleibt, die so gewählt ist, dass die Produktwendeeinrichtung 38a das Fördern der Produkte 18a nicht beeinflusst. Der längenveränderliche Bandabschnitt 52a des Produkteinlauffördermittels 24a ist in diesem Betriebszustand in Richtung des Produktabgabefördermittels 28a auf eine maximale Länge ausgefahren, so dass der Übergangsbereich 58a durch die Produktwendeeinrichtung 40a überbrückt werden kann.

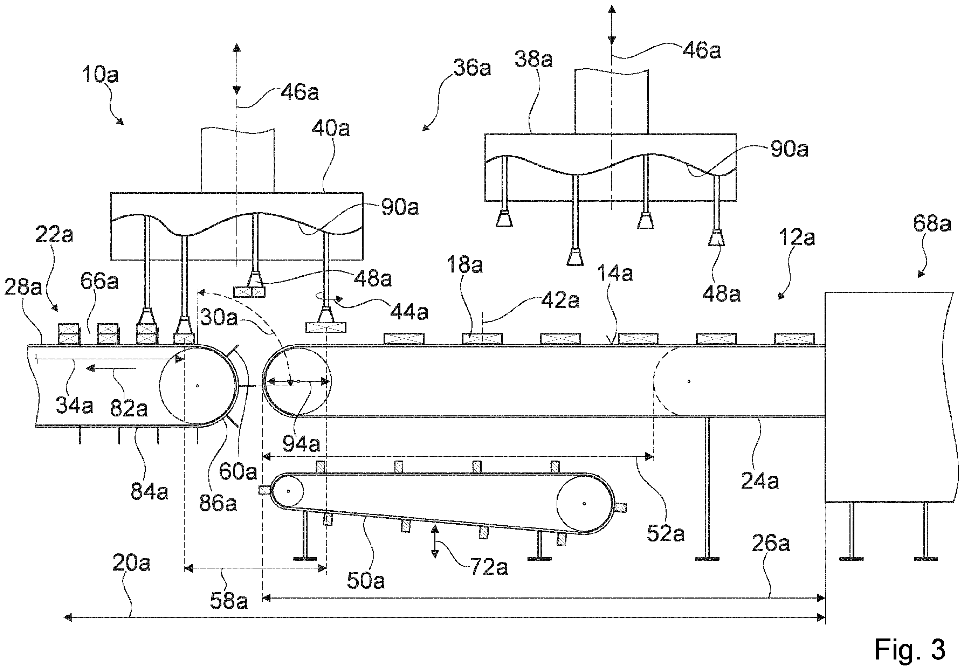

Figur 3 zeigt die Fördervorrichtung 10a in einer Variante des ersten Betriebszustands beim Bilden von vertikalen Produktstapeln 66a. Dies erfolgt, indem durch die Produktwendeeinrichtung 40a jeweils zwei Produkte 18a an einer Position des Transportelements 78a abgelegt werden. Dies kann erreicht werden, indem das Transportelement 78a während der Abgabe des ersten und des zweiten Produkts 18a kurzzeitig gestoppt oder zumindest verlangsamt wird und/oder indem eine Abgabeposition der Produktwendeeinrichtung 40a variabel ist. Der Fachmann wird abhängig von einer zu erzielenden Produktleistung ein geeignetes Verfahren wählen.

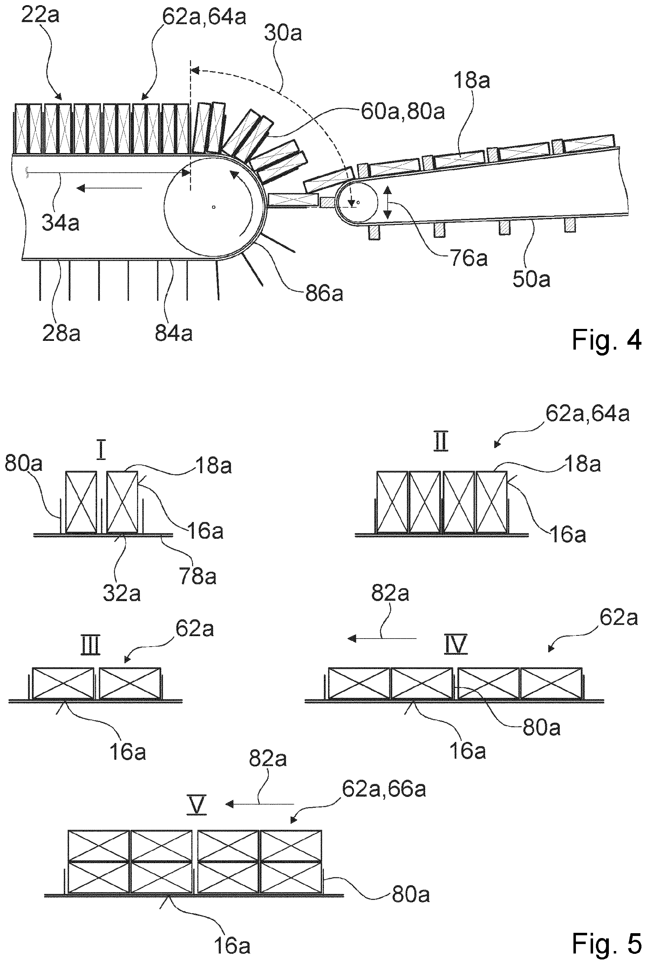

Figur 4 zeigt die Fördervorrichtung 10a in einer Variante des weiteren Betriebszustands beim Bilden von horizontalen Produktstapeln 64a. Dies erfolgt, indem das Zwischenförderband 50a jeweils zwei Produkte 18a im Aufrichtabschnitt 30a zwischen jeweils zwei Trennelemente 80a des Transportelements 78a ablegt. In diesem Fall werden jeweils aus zwei Produkten 18a bestehende horizontale Produktstapel 64a gebildet. Die Trennelemente 80a bilden dabei Gruppiermittel 60a. Es ist ebenso möglich, eine größere Anzahl von Produkten 18a zwischen die Trennelemente 80a zu legen. Dazu muss ein Abstand zwischen den Trennelementen 80a ausreichend groß eingestellt werden, beziehungsweise das Transportelement 78a muss gegen ein Transportelement mit Trennelementen im benötigten Abstand ausgetauscht werden. Zusätzlich führt das Zwischenförderband 50a bevorzugt eine zur Transportebene 14a senkrechte Stapelbewegung 76a aus, um eine durch das Einlegen weiterer Produkte 18a wachsende Höhe des Produktstapels 64a an der Ablageposition im Aufrichtabschnitt 30a auszugleichen.

Figur 5 zeigt Beispiele von mittels der Fördervorrichtung 10a gebildeten Produktkonfigurationen. Figur 5-I zeigt eine Konfiguration von einzeln zwischen den Trennelementen 80a des Transportelements 78a auf ihren Rändern 32a stehenden Produkten 18a. Diese Produktkonfiguration wird im weiteren Betriebszustand gebildet und entspricht der Produktkonfiguration der Figur 2. Figur 5-II zeigt eine Konfiguration von jeweils zwei zwischen den Trennelementen 80a des Transportelements 78a auf ihren Rändern 32a stehenden Produkten 18a. Die Produkte 18a bilden dabei Produktgruppen 62a von horizontalen Produktstapeln 64a. Diese Produktkonfiguration wird im weiteren Betriebszustand gebildet und entspricht der Produktkonfiguration der Figur 4. Figur 5-III zeigt eine Konfiguration von einzeln zwischen den Trennelementen 80a des Transportelements 78a auf ihren Hauptflächen 16a liegenden Produkten 18a. Diese Produktkonfiguration wird im ersten Betriebszustand gebildet und entspricht der Produktkonfiguration der Figur 1. Figur 5-IV zeigt eine Konfiguration von jeweils zwei zwischen den Trennelementen 80a des Transportelements 78a in Transportrichtung 82a nebeneinander auf ihren Hauptflächen 16a liegenden Produkten 18a. Diese Produktkonfiguration wird in einer Variante des ersten Betriebszustands gebildet, bei der zwischen zwei Trennelemente 80a jeweils zwei Produkte 18a nebeneinander abgegeben werden. Figur 5-V zeigt eine Konfiguration von jeweils zwei zwischen den Trennelementen 80a des Transportelements 78a in Transportrichtung 82a nebeneinander angeordneten vertikalen Produktstapeln 66a, die von jeweils zwei auf ihren Hauptflächen 16a liegenden Produkten 18a gebildet werden. Diese Produktkonfiguration wird in einer Variante des ersten Betriebszustands gebildet, bei der zwischen zwei Trennelemente 80a jeweils zwei Produkte 18a nebeneinander abgegeben und jeweils zwei Produkte 18a übereinander abgegeben werden. Der Fachmann wird mit der Fördervorrichtung 10a weitere Produktkonfigurationen von Produkten 18a bilden.

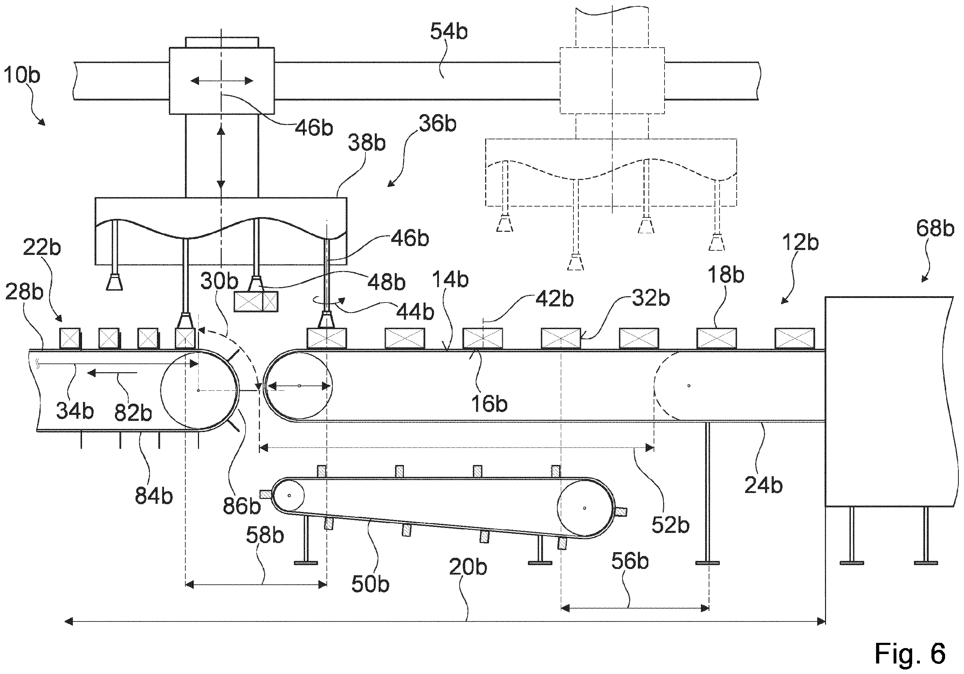

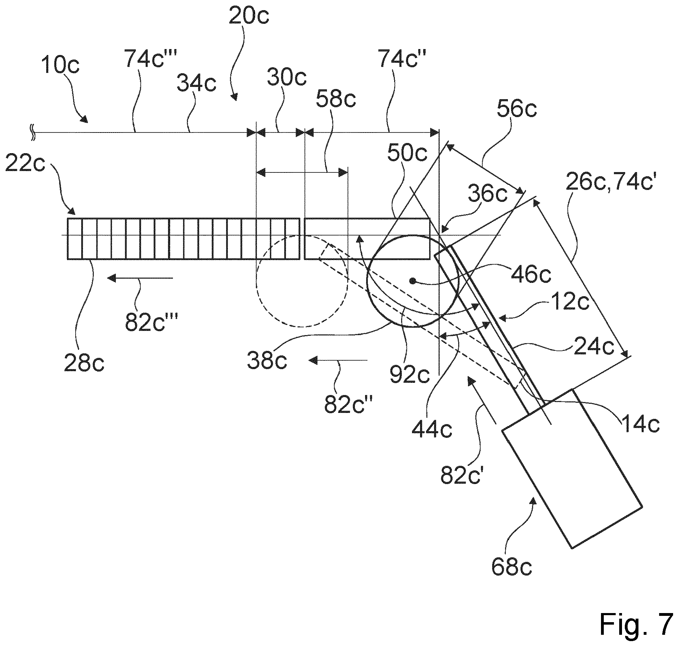

In den Figuren 6 und 7 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 und 7 ist der Buchstabe a durch den Buchstaben b und c ersetzt.

Figur 6 zeigt eine Fördervorrichtung 10b in einem zweiten Ausführungsbeispiel. Die Fördervorrichtung 10b unterscheidet sich von der Fördervorrichtung 10a insbesondere dadurch, dass eine Produktwendeeinrichtung 38b an einer Lagereinheit 54b gelagert ist, die dazu vorgesehen ist, die Produktwendeeinrichtung 38b zwischen einem Übergangsbereich 56b von einem Produkteinlauffördermittel 24b zu einem Zwischenförderband 50b und einem Übergangsbereich 58b vom Produkteinlauffördermittel 24b zu einem Produktabgabefördermittel 28b verschiebbar zu lagern. Es kann auf diese Art eine zweite Produktwendeeinrichtung eingespart werden. Die Produktwendeeinrichtung 38b wird in einem ersten, zu einer Abgabe von auf ihren Hauptflächen liegenden Produkten 18b vorgesehenen Betriebszustand im Übergangsbereich 58b in Richtung einer Transportebene 14b abgesenkt und in Betrieb genommen und wird in einem weiteren, zu einer Abgabe von auf ihren Rändern 32b stehenden Produkten 18b vorgesehenen Betriebszustand in den Übergangsbereich 56b verschoben und in Richtung der Transportebene 14b abgesenkt und in Betrieb genommen. Das Verschieben erfolgt durch eine nicht dargestellte Antriebseinheit, die dazu vorgesehen ist, eine Verschiebebewegung anzutreiben, und wird durch eine ebenfalls nicht dargestellte Steuereinheit gesteuert. Die weitere Funktion entspricht der Fördervorrichtung 10a des ersten Ausführungsbeispiels. Insbesondere weist die Fördervorrichtung 10b wie die Fördervorrichtung 10a einen Produkteinlaufbereich 12b, einen Produktabgabebereich 22b und eine Zwischenfördervorrichtung 36b auf. Das Produkteinlauffördermittel 28b weist ebenfalls einen Aufrichtabschnitt 30b, einen Förderabschnitt 34b, einen Rücklaufabschnitt 84b und Umlenkabschnitte 86b auf. Produkte 18b werden durch Produkttransportmittel 48b der Produktwendeeinrichtung 38b ebenfalls um eine Rotationsachse 46b gedreht. Das Produkteinlauffördermittel 24b fördert die Produkte 18b von einer Verpackungsmaschine 68b kommend in einer Transportrichtung 82b entlang der Transportstrecke 20b in den Produkteinlaufbereich 12b und weist ebenfalls einen längenveränderlichen Bandabschnitt 52b auf. Die Funktionen dieser Elemente entsprechen dem ersten Ausführungsbeispiel.

Figur 7 zeigt eine Fördervorrichtung 10c in einem dritten Ausführungsbeispiel. Die Fördervorrichtung 10c unterscheidet sich von der Fördervorrichtung 10b des zweiten Ausführungsbeispiels insbesondere dadurch, dass eine Transportstrecke 20c in einem ersten Transportstreckenabschnitt 26c sowie in einem Förderabschnitt 34c abweichende Transportrichtungen 82c aufweist. Ein sich an eine Verpackungsmaschine 68c anschließender Produkteinlaufbereich 12c mit einem Produkteinlauffördermittel 24c erstreckt sich entlang eines ersten Abschnitts 74c' der Transportstrecke 20c und weist eine Transportrichtung 82c' auf. Ein Produktabgabebereich 22c mit einem Produktabgabefördermittel 28c erstreckt sich entlang eines dritten Abschnitts 74c''' der Transportstrecke 20c und weist eine Transportrichtung 82c''' auf. Ein Aufrichtabschnitt 30c des Produktabgabefördermittels 28c weist ebenfalls die Transportrichtung 82c''' auf. Ein Zwischenförderband 50c einer Zwischenfördervorrichtung 36c weist entlang eines zweiten Abschnitts 74c" der Transportstrecke 20c eine Transportrichtung 82c" auf, die der Transportrichtung 82c''' des Produktabgabefördermittels 28c entspricht. Ein Winkel 92c zwischen der ersten Transportrichtung 82c' und der zweiten und dritten Transportrichtung 82c", 82c''' beträgt bevorzugt 90° - 180° und wird vom Fachmann abhängig von Layoutanforderungen festgelegt. Eine Produktwendeeinrichtung 38c der Zwischenfördervorrichtung 36c wird in einem ersten, zu einer Abgabe von in dieser Figur nicht dargestellten, auf ihren Hauptflächen liegenden Produkten vorgesehenen Betriebszustand in einen Übergangsbereich 58c verschoben, in Richtung einer Transportebene 14c abgesenkt und in Betrieb genommen und in einem weiteren, zu einer Abgabe von auf ihren Rändern stehenden Produkten vorgesehenen Betriebszustand in einen Übergangsbereich 56c verschoben, in Richtung der Transportebene 14c abgesenkt und in Betrieb genommen. Der Übergangsbereich 58c ist zwischen dem Produkteinlauffördermittel 24c und dem Produktabgabefördermittel 28c angeordnet und der Übergangsbereich 56c ist zwischen dem Produkteinlauffördermittel 24c und dem Zwischenförderband 50c angeordnet, die in Funktion und Aufbau dem ersten Ausführungsbeispiel entsprechen. Der Winkel 92c ändert sich, wenn die Produktwendeeinrichtung 38c verschoben wird. Ein Solldrehwinkel 44c, um den die Produktwendeeinrichtung 38c Produkte um eine zur Transportebene 14c senkrechte Rotationsachse 46c drehen muss, um sie in einer Längsorientierung auf dem Produkteinlauffördermittel 24c aufzunehmen und in einer Querorientierung auf dem Produktabgabefördermittel 28c abzugeben, entspricht dabei dem Winkel 92c abzüglich 90°. Die Produktwendeeinrichtung 38c wird durch eine hier nicht dargestellte Steuereinheit so angesteuert, dass sie die Produkte um den gewünschten Solldrehwinkel 44c dreht.

## Patentansprüche

1. Fördervorrichtung zum Fördern von flachen, in einem Produkteinlaufbereich (12a-c) in einer Transportebene (14a-c) auf ihren Hauptflächen (16a) liegend zugeführten Produkten (18a; 18b) entlang einer Transportstrecke (20a-c) zu einem Produktabgabebereich (22a-c), mit zumindest einem Produkteinlauffördermittel (24a-c), das dazu vorgesehen ist, die auf ihren Hauptflächen (16a) liegend zugeführten Produkte (18a; 18b) ausgehend vom Produkteinlaufbereich (12a-c) entlang eines ersten Transportstreckenabschnitts (26a; 26c) zu fördern, mit einem Produktabgabefördermittel (28a-c) das einen Aufrichtabschnitt (30a-c), der dazu vorgesehen ist, die Produkte (18a; 18b) auf ihre jeweiligen Ränder (32a) aufzurichten, sowie einen sich anschließenden Förderabschnitt (34a-c), der dazu vorgesehen ist, die Produkte (18a; 18b) in den Produktabgabebereich (22a-c) zu fördern, aufweist, und mit einer Zwischenfördervorrichtung (36a-c), die dazu vorgesehen ist, die Produkte (18a; 18b) vom zumindest einen Produkteinlauffördermittel (24a-c) zum Produktabgabefördermittel (28a-c) zu fördern, wobei_die Zwischenfördervorrichtung (36a-c) dazu vorgesehen ist, in einem ersten, zu einer Abgabe von auf ihren Hauptflächen (16a) liegenden Produkten (18a; 18b) vorgesehenen Betriebszustand die Produkte (18a; 18b) im Förderabschnitt (34a-c) des Produktabgabefördermittels (28a-c) abzulegen und in einem weiteren, zu einer Abgabe von auf ihren Rändern (32a) stehenden Produkten (18a; 18b) vorgesehenen Betriebszustand die Produkte (18a; 18b) im Aufrichtabschnitt (30a-c) des Produktabgabefördermittels (28a-c) abzulegen, wobei die Zwischenfördervorrichtung (36a-c) ein in die Transportstrecke (20a-c) bewegbares Zwischenförderband (50a-c) aufweist, das dazu vorgesehen ist, die Produkte (18a; 18b) im weiteren, zu einer Abgabe von auf ihren Rändern (32a) stehenden Produkten (18a; 18b) vorgesehenen Betriebszustand zum Aufrichtabschnitt (30a-c) des Produktabgabefördermittels (28a-c) zu fördern, **dadurch gekennzeichnet, dass** die Zwischenfördervorrichtung (36a-c) zumindest eine Produktwendeeinrichtung (38a-c, 40a) aufweist, die dazu vorgesehen ist, die Produkte (18a; 18b) in einem Fördervorgang aufzunehmen, um eine zu deren Hauptflächen (16a) senkrechte Achse (42a) um einen Solldrehwinkel (44a; 44c) zu drehen und in Folge wieder abzugeben.

2. Fördervorrichtung nach Anspruch 1, **dadurch gekennzeichnet, dass** die zumindest eine Produktwendeeinrichtung (38a-c, 40a) zum Drehen der Produkte (18a; 18b) um eine zur Transportebene (14a-c) senkrechte Rotationsachse (46a-c) umlaufende Produkttransportmittel (48a; 48b) aufweist, die dazu vorgesehen sind, die Produkte (18a; 18b) zum Transport aufzunehmen und nach einem Umlauf der Produkttransportmittel (48a; 48b) um den Solldrehwinkel (44a; 44c) um die Rotationsachse (46a-c) wieder abzugeben.

3. Fördervorrichtung-nach-einem der vorhergehenden Ansprüche, **dadurch gekennzeichnet, dass** die Produktwendeeinrichtung (38a) dazu vorgesehen ist, im weiteren, zu einer Abgabe von auf ihren Rändern (32a) stehenden Produkten (18a; 18b) vorgesehenen Betriebszustand die Produkte (18a; 18b) vom zumindest einen Produkteinlauffördermittel (24a-c) aufzunehmen und auf das Zwischenförderband (50a-c) abzugeben.

4. Fördervorrichtung nach einem der vorhergehenden Ansprüche, **dadurch gekennzeichnet, dass** das zumindest eine Produkteinlauffördermittel (24a-c) einen in Richtung der Transportstrecke (20a-c) längenveränderlichen Bandabschnitt (52a; 52b) aufweist, der dazu vorgesehen ist, eine bei aus der Transportstrecke (20a-c) herausbewegtem Zwischenförderband (50a-c) entstehende Lücke der Transportstrecke (20a-c) zumindest teilweise zu überbrücken.

5. Fördervorrichtung nach einem der vorhergehenden Ansprüche, **dadurch gekennzeichnet, dass** die Produktwendeeinrichtung (40a; 38b-c) dazu vorgesehen ist, im ersten, zu einer Abgabe von auf ihren Hauptflächen (16a) liegenden Produkten (18a; 18b) vorgesehenen Betriebszustand die Produkte (18a; 18b) vom Produkteinlauffördermittel (24a-c) aufzunehmen und um die zu deren Hauptflächen (16a) senkrechte Achse (42a-c) um den Solldrehwinkel (44a-c) gedreht auf den Förderabschnitt (34a-c) des Produktabgabefördermittels (28a-c) abzugeben.

6. Fördervorrichtung nach einem der vorhergehenden Ansprüche, **gekennzeichnet durch** eine Lagereinheit (54b), die dazu vorgesehen ist, die Produktwendeeinrichtung (38b) zwischen einem Übergangsbereich (56b) vom Produkteinlauffördermittel (24b) zum Zwischenförderband (50b) und einem Übergangsbereich (58b) vom Produkteinlauffördermittel (24b) zum Produktabgabefördermittel (28b) verschiebbar zu lagern.

7. Fördervorrichtung nach einem der vorhergehenden Ansprüche, **dadurch gekennzeichnet, dass** das Produktabgabefördermittel (28a) Gruppiermittel (60a) zum Überführen der Produkte (18a) in Produktgruppen (62a) von horizontalen Produktstapeln (64a) und/oder vertikalen Produktstapeln (66a) aufweist.

8. Verpackungsmaschine mit einer Fördervorrichtung (10a-c) nach einem der Ansprüche 1 bis 7.

9. Verfahren zum Fördern von flachen, in einem Produkteinlaufbereich (12a-c) in einer Transportebene (14a-c) auf ihren Hauptflächen (16a) liegend zugeführten Produkten (18a; 18b) entlang einer Transportstrecke (20a-c) zu einem Produktabgabebereich (22a-c), mit zumindest einem Produkteinlauffördermittel (24a-c), wobei die auf ihren Hauptflächen (16a) liegend zugeführten Produkte (18a; 18b) ausgehend vom Produkteinlaufbereich (12a-c) entlang eines ersten Transportstreckenabschnitts (26a; 26c) gefördert werden, mit einem Produktabgabefördermittel (28a-c) das einen Aufrichtabschnitt (30a-c) aufweist, sowie einen sich anschließenden Förderabschnitt (34a-c), der die Produkte (18a; 18b) in den Produktabgabebereich (22a-c) fördert, und mit einer Zwischenfördervorrichtung (36a-c), die die Produkte (18a; 18b) vom zumindest einen Produkteinlauffördermittel (24a-c) zum Produktabgabefördermittel (28a-c) transportiert, wobei die Zwischenfördervorrichtung (36a-c) in einem ersten, zu einer Abgabe von auf ihren Hauptflächen (16a) liegenden Produkten (18a; 18b) vorgesehenen Betriebszustand die Produkte (18a; 18b) im Förderabschnitt (34a-c) des Produktabgabefördermittels (28a-c) legt und in einem weiteren, zu einer Abgabe von auf ihren Rändern (32a) stehenden Produkten (18a; 18b) vorgesehenen Betriebszustand die Produkte (18a; 18b) im Aufrichtabschnitt (30a-c) des Produktabgabefördermittels (28a-c) legt, **dadurch gekennzeichnet, dass** die Zwischenfördervorrichtung (36a-c) zumindest eine Produktwendeeinrichtung (38a-c, 40a) aufweist, die die Produkte (18a; 18b) in einem Fördervorgang aufnimmt, um eine zu deren Hauptflächen (16a) senkrechte Achse (42a) um einen Solldrehwinkel (44a; 44c) dreht und in Folge wieder abgibt.

## Claims

1. Conveying apparatus by means of which flat products (18a; 18b) which are fed in a product-introduction region (12a-c) in a state in which they lie on their main surfaces (16a) in a transporting plane (14a-c) are conveyed along a transporting route (20a-c) to a product-discharging region (22a-c), having at least one product-introduction conveying means (24a-c), which is provided so that the products (18a; 18b) which are fed in a state in which they lie on their main surfaces (16a) are conveyed from the product-introduction region (12a-c) along a first transporting-route portion (26a; 26c), having a product-discharge conveying means (28a-c) with an erecting portion (30a-c), which is provided to erect the products (18a; 18b) onto their respective peripheries (32a), and with an adjoining conveying portion (34a-c), which is provided to convey the products (18a; 18b) into the product-discharging region (22a-c), and having an intermediate conveying apparatus (36a-c), which is provided to convey the products (18a; 18b) from at least one product-introduction conveying means (24a-c) to the product-discharge conveying means (28a-c), wherein the intermediate conveying apparatus (36a-c) is provided so that in a first operating state, which is provided for discharging products (18a; 18b) lying on their main surfaces (16a), the products (18a; 18b) are set down in the conveying portion (34a-c) of the product-discharge conveying means (28a-c) and in a further operating state, which is provided for discharging products (18a; 18b) standing on their peripheries (32a), the products (18a; 18b) are set down in the erecting portion (30a-c) of the product-discharge conveying means (28a-c), wherein the intermediate conveying apparatus (36a-c) has an intermediate conveyor belt (50a-c), which can be moved into the transporting route (20a-c) and is provided so that in the further operating state, which is provided for discharging products (18a; 18b) standing on their peripheries (32a), the products (18a; 18b) are conveyed to the erecting portion (30a-c) of the product-discharge conveying means (28a-c), **characterized in that** the intermediate conveying apparatus (36a-c) has at last one product-turning device (38a-c, 40a), which is provided to accommodate the products (18a; 18b) in a conveying operation, to rotate them through a desired angle of rotation (44a; 44c) about an axis (42a) perpendicular to the main surfaces (16a) of said products, and then to set them down again.

2. Conveying apparatus according to Claim 1, **characterized in that** the at least one product-turning device (38a-c, 40a), for rotating the products (18a; 18b) about an axis of rotation (46a-c) perpendicular to the transporting plane (14a-c), has revolving product-transporting means (48a; 48b), which are provided to receive the products (18a; 18b) for transporting purposes and to set them down again following a revolution of the product-transporting means (48a; 48b) through the desired angle of rotation (44a; 44c) about the axis of rotation (46a-c).

3. Conveying apparatus according to either of the preceding claims, **characterized in that** the product-turning device (38a) is provided so that in the further operating state, which is provided for discharging products (18a; 18b) standing on their peripheries (32a), the products (18a; 18b) are received by the at least one product-introduction conveying means (24a-c) and set down on the intermediate conveyor belt (50a-c).

4. Conveying apparatus according to one of the preceding claims, **characterized in that** the at least one product-introduction conveying means (24a-c) has a belt portion (52a; 52b), which can be altered in length in the direction of the transporting route (20a-c) and is provided to bridge, at least in part, a gap in the transporting route (20a-c) which is produced when the intermediate conveyor belt (50a-c) is moved out of the transporting route (20a-c).

5. Conveying apparatus according to one of the preceding claims, **characterized in that** the product-turning device (40a; 38b-c) is provided so that in the first operating state, which is provided for discharging products (18a; 18b) lying on their main surfaces (16a), the products (18a; 18b) are received from the product-introduction conveying means (24a-c) and are set down on the conveying portion (34a-c) of the product-discharge conveying means (28a-c) in a state in which they have been rotated through the desired angle of rotation (44a-c) about the axis (42a-c), which is perpendicular to the main surfaces (16a) of said products.

6. Conveying apparatus according to one of the preceding claims, **characterized by** a bearing unit (54b), which is provided to mount the product-turning device (38b) such that it can be displaced between a transition region (56b) from the product-introduction conveying means (24b) to the intermediate conveyor belt (50b) and a transition region (58b) from the product-introduction conveying means (24b) to the product-discharge conveying means (28b).

7. Conveying apparatus according to one of the preceding claims, **characterized in that** the product-discharge conveying means (28a) has grouping means (60a) for transferring the products (18a) in product groups (62a) from horizontal product stacks (64a) and/or vertical product stacks (66a).

8. Packaging machine having a conveying apparatus (10a-c) according to one of Claims 1 to 7.

9. Method by means of which flat products (18a; 18b) which are fed in a product-introduction region (12a-c) in a state in which they lie on their main surfaces (16a) in a transporting plane (14a-c) are conveyed along a transporting route (20a-c) to a product-discharging region (22a-c), having at least one product-introduction conveying means (24a-c), wherein the products (18a; 18b) which are fed in a state in which they lie on their main surfaces (16a) are conveyed from the product-introduction region (12a-c) along a first transporting-route portion (26a; 26c), having a product-discharge conveying means (28a-c) with an erecting portion (30a-c), and with an adjoining conveying portion (34a-c), which conveys the products (18a; 18b) into the product-discharging region (22a-c), and having an intermediate conveying apparatus (36a-c), which transports the products (18a; 18b) from at least one product-introduction conveying means (24a-c) to the product-discharge conveying means (28a-c), wherein the intermediate conveying apparatus (36a-c) in a first operating state, which is provided for discharging products (18a; 18b) lying on their main surfaces (16a), positions the products (18a; 18b) in the conveying portion (34a-c) of the product-discharge conveying means (28a-c) and in a further operating state, which is provided for discharging products (18a; 18b) standing on their peripheries (32a), positions the products (18a; 18b) in the erecting portion (30a-c) of the product-discharge conveying means (28a-c), **characterized in that** the intermediate conveying apparatus (36a-c) has at last one product-turning device (38a-c, 40a), which is provided to accommodate the products (18a; 18b) in a conveying operation, to rotate them through a desired angle of rotation (44a; 44c) about an axis (42a) perpendicular to the main surfaces (16a) of said products, and then to set them down again.

## Revendications

1. Dispositif de transport destiné au transport de produits (18a ; 18b) plats, acheminés dans une zone d'entrée de produits (12a-c) allongés sur leurs surfaces principales (16a) dans un plan de transport (14a-c), le long d'un trajet de transport (20a-c) vers une zone de délivrance de produits (22a-c), avec au moins un moyen de transport d'entrée de produits (24a-c) qui est prévu pour transporter les produits (18a ; 18b) acheminés allongés sur leurs surfaces principales (16a) en partant de la zone d'entrée de produits (12a-c) le long d'un premier tronçon de trajet de transport (26a ; 26c), avec un moyen de transport de délivrance de produits (28a-c) qui présente un tronçon de redressement (30a-c) qui est prévu pour redresser les produits (18a ; 18b) sur leurs bords (32a) respectifs ainsi qu'un tronçon de transport (34a-c) raccordé qui est prévu pour transporter les produits (18a ; 18b) vers la zone de délivrance de produits (22a-c), et avec un dispositif de transport intermédiaire (36a-c) qui est prévu pour transporter les produits (18a ; 18b) à partir du moyen de transport d'entrée de produits (24a-c) au moins au nombre de un vers le moyen de transport de délivrance de produits (28a-c), le dispositif de transport intermédiaire (36a-c) étant prévu pour, dans un premier état de fonctionnement prévu pour une délivrance de produits (18a ; 18b) allongés sur leurs surfaces principales (16a), déposer les produits (18a ; 18b) dans le tronçon de transport (34a-c) du moyen de transport de délivrance de produits (28a-c) et, dans un autre état de fonctionnement prévu pour une délivrance de produits (18a ; 18b) dressés sur leurs bords (32a), pour déposer les produits (18a ; 18b) dans le tronçon de redressement (30a-c) du moyen de transport de délivrance de produits (28a-c), le dispositif de transport intermédiaire (36a-c) présentant une bande de transport intermédiaire (50a-c) qui peut se déplacer dans le trajet de transport (20a-c) et qui est prévue pour, dans l'autre état de fonctionnement prévu pour une délivrance de produits (18a ; 18b) dressés sur leurs bords (32a), transporter les produits (18a ; 18b) vers le tronçon de redressement (30a-c) du moyen de transport de délivrance de produits (28a-c), **caractérisé en ce que** le dispositif de transport intermédiaire (36a-c) présente au moins un système de retournement de produits (38a-c, 40a) qui est prévu pour recevoir les produits (18a ; 18b) dans un processus de transport, pour les faire tourner selon un angle de rotation de consigne (44a ; 44c) autour d'un axe (42a) perpendiculaire à leurs surfaces principales (16a) et les délivrer de nouveau ensuite.

2. Dispositif de transport selon la revendication 1, **caractérisé en ce que**, pour faire tourner les produits (18a ; 18b), le système de retournement de produits (38a-c, 40a) au moins au nombre de un présente des moyens de transport de produits (48a ; 48b), tournant autour d'un axe de rotation (46a-c) perpendiculaire au plan de transport (14a-c), qui sont prévus pour recevoir les produits (18a ; 18b) pour le transport et pour les délivrer de nouveau après une rotation des moyens de transport de produits (48a ; 48b) selon l'angle de rotation de consigne (44a ; 44c) autour de l'axe de rotation (46a-c).

3. Dispositif de transport selon l'une des revendications précédentes, **caractérisé en ce que** le système de retournement de produits (38a) est prévu pour, dans l'autre état de fonctionnement prévu pour une délivrance de produits (18a ; 18b) dressés sur leurs bords (32a), recevoir les produits (18a ; 18b) à partir du moyen de transport d'entrée de produits (24a-c) au moins au nombre de un et les délivrer sur la bande de transport intermédiaire (50a-c).

4. Dispositif de transport selon l'une des revendications précédentes, **caractérisé en ce que** le moyen de transport d'entrée de produits (24a-c) au moins au nombre de un présente un tronçon de bande (52a ; 52b) dont la longueur peut varier dans la direction du trajet de transport (20a-c) et qui est prévu pour enjamber au moins partiellement une lacune du trajet de transport (20a-c) créée lorsque la bande de transport intermédiaire (50a-c) est sortie et déplacée hors du trajet de transport (20a-c).

5. Dispositif de transport selon l'une des revendications précédentes, **caractérisé en ce que** le système de retournement de produits (40a ; 38b-c,) est prévu pour, dans le premier état de fonctionnement prévu pour une délivrance de produits (18a ; 18b) allongés sur leurs surfaces principales (16a), recevoir les produits (18a ; 18b) à partir du moyen de transport d'entrée de produits (24a-c) et pour les délivrer sur le tronçon de transport (34a-c) du moyen de transport de délivrance de produits (28a-c) alors qu'ils sont tournés selon l'angle de rotation de consigne (44a-44c) autour de l'axe (42a-c) perpendiculaire à leurs surfaces principales (16a).

6. Dispositif de transport selon l'une des revendications précédentes, **caractérisé par** une unité de support (54b) qui est prévue pour supporter le système de retournement de produits (38b) de façon coulissante entre une zone de transition (56b) à partir du moyen de transport d'entrée de produits (24b) vers la bande de transport intermédiaire (50b) et une zone de transition (58b) à partir du moyen de transport d'entrée de produits (24b) vers le moyen de transport de délivrance de produits (28b).

7. Dispositif de transport selon l'une des revendications précédentes, **caractérisé en ce que** le moyen de transport de délivrance de produits (28a) présente des moyens de regroupement (60a) destinés au transfert des produits (18a) dans des groupes de produits (62a) de piles de produits horizontaux (64a) et/ou de piles de produits verticaux (66a).

8. Machine d'emballage avec un dispositif de transport (10a-c) selon l'une des revendications 1 à 7.

9. Procédé destiné au transport de produits (18a ; 18b) plats, acheminés dans une zone d'entrée de produits (12a-c) allongés sur leurs surfaces principales (16a) dans un plan de transport (14a-c), le long d'un trajet de transport (20a-c) vers une zone de délivrance de produits (22a-c), avec au moins un moyen de transport d'entrée de produits (24a-c), les produits (18a ; 18b) acheminés allongés sur leurs surfaces principales (16a) étant transportés en partant de la zone d'entrée de produits (12a-c) le long d'un premier tronçon de trajet de transport (26a ; 26c), avec un moyen de transport de délivrance de produits (28a-c) qui présente un tronçon de redressement (30a-c) ainsi qu'un tronçon de transport (34a-c) raccordé qui transporte les produits (18a ; 18b) vers la zone de délivrance de produits (22a-c), et avec un dispositif de transport intermédiaire (36a-c) qui transporte les produits (18a ; 18b) à partir du moyen de transport d'entrée de produits (24a-c) au moins au nombre de un vers le moyen de transport de délivrance de produits (28a-c), le dispositif de transport intermédiaire (36a-c), dans un premier état de fonctionnement prévu pour une délivrance de produits (18a ; 18b) allongés sur leurs surfaces principales (16a), posant les produits (18a ; 18b) dans le tronçon de transport (34a-c) du moyen de transport de délivrance de produits (28a-c) et, dans autre état de fonctionnement prévu pour une délivrance de produits (18a ; 18b) dressés sur leurs bords (32a), posant les produits (18a ; 18b) dans le tronçon de redressement (30a-c) du moyen de transport de délivrance de produits (28a-c), **caractérisé en ce que** le dispositif de transport intermédiaire (36a-c) présente au moins un système de retournement de produits (38a-c, 40a) qui reçoit les produits (18a ; 18b) dans un processus de transport, les fait tourner selon un angle de rotation de consigne (44a ; 44c) autour d'un axe (42a) perpendiculaire à leurs surfaces principales (16a) et les délivre de nouveau ensuite.
